# EUROPEAN PATENT SPECIFICATION

(11) **EP 1 954 587 B1**
(45) Date of publication and mention of the grant of the patent: **19.04.2017**
(21) Application number: 05810931.5
(22) Date of filing: 29.11.2005
(51) Int. Cl.: B65D 65/08, A01F 15/07

(54) **A WRAPPING MATERIAL WITH FASTENER**
EINWICKELMATERIAL MIT BEFESTIGUNGSVORRICHTUNG
MATÉRIAU D'EMBALLAGE AVEC ÉLÉMENT DE FIXATION

(43) Date of publication of application: 13.08.2008
(73) Proprietor: Tama Plastic Industry, 19236 Mishmar Ha'Emek (IL)
(72) Inventor: DERSCHEID, Daniel Eric, Hendrick, Iowa 52563 (US); PAZ, Hagai, 19236 Mishmar Ha'Emek (IL); EFRATI, Yair, 19236 Mishmar Ha'Emek (IL); ANSTEY, Henry Dennis, Ottumwa, Iowa 52501 (US)
(74) Representative: Grey, Ian Michael
(86) International application number: PCT/IB2005/003589
(87) International publication number: WO 2007/063351

(56) References cited:
- EP-A- 0 233 471
- EP-A- 1 474 965
- DE-A1- 3 301 420
- DE-A1- 3 525 294
- GB-A- 2 221 841
- US-A- 3 623 485
- US-A- 4 569 439
- US-A- 4 628 709
- US-A1- 2004 121 108
- US-A1- 2006 101 624

## Description

The present invention relates to a wrapping material incorporating a fastener, which secures the tail end of the wrapping material to the fibers of an underlying portion of the wrapping material at the conclusion of a wrapping cycle.

The use of balers for baling agricultural crops into "round" bales (referring to a generally cylindrically shaped bale having a generally round cross-section) has become increasingly common in recent years, replacing the old system of baling square bales that were secured by different types of twine or metal wire. The first round-balers also used various types of twines to secure the bale, however, over the years different types of netting have been used. The use of netting, and in particular, knitted Raschel netting, has become more and more common. Raschel netting is a knitted netting that typically is made from polymeric material and includes a plurality of equally spaced longitudinal ribbons known as "franzes" and a plurality of intervening zigzag ribbons known as "schusses." However, the netting used, including Raschel knitted netting, is primarily open, with the franzes and schusses only making up a small percentage of the surface area of the bale and does not protect the bales from rain.

Plastic film wrap, including "sticky film" wrap has been used to wrap whole bales or portions of bales, with the goal of protecting a bale from rain.

However, the use of impermeable plastic film wrap does not allow moisture already within a baled crop to escape there from, since it is bound by an impermeable plastic layer. Since the inherent moisture level in baled crops may be on the order of one or more dozen percent of weight of the crop (for example, in baled hay), this bound-in humidity easily promotes spoilage of the baled crop.

Moreover, when such plastic film has been used in existing netting systems, typically only a portion of the bale was covered, leaving part of the circumference unwrapped and exposed to rain and/or to moisture from the ground on which the bale is resting. If the entire bale was wrapped with plastic film, then internal moisture could not escape. Likewise, any excess moisture gained by the crop from exposure to weather also promoted spoilage of the baled crop. Since bales are often left in a field, exposed to weather for a year or more, cumulative rain and/or ground moisture penetration may be significant, as may be the resultant crop spoilage.

Another disadvantage of using plastic film as a bale wrap has been that the film does not, itself, grasp onto a bale or underlying film layer, and thus a "sticky" portion had to be incorporated to prevent unraveling of the bale. However, use of such sticky film, even if only a small amount, was difficult to feed into a baler. Reasons for this include that, in the process of loading the film and wrapping a bale, the sticky film stuck to elements of the machine as well, making use of these materials difficult. In order to solve the problem of sticky film sticking to a baling apparatus itself, significant alterations to the baling apparatus had to have been made, often proving not to be cost-effective.

The use of VELCRO, or VELCRO-type fasteners for wrapping and closing containers are known, as shown by U.S. Patent 5,732,531 to de Silva et al., EP 0 608 871 A2 to de Silva, and Published UK Patent Application GB 2 221 841 A to Pentith.

Other known wrapping and closing containers, fasteners, and/or balers are also shown by the following (I) US. Patents: 1,331,367, 1,557,881; 1,452,100; 2,539,725; 3,056,245; 3,120,727; 3,138,841; 3,623,485; 3,654,049; 3,733,769; 3,797,650; 3,816,6700; 4,157,754; 4,318,264; 4,333,602; 4,505,424; 4,556,167; 4,679,851; 4,628,709; 4,703,605; 4,753,182; 4,775,310; 4,901,855; 5,012,631; 5,111,931; 5,152,125; 5,457,855; 6,443,187; 5,732,531; 6,453,805; and 6,425,322., (2) U.S. Patent Application Publication: 2004/0121108 ,and (3) foreign patent documents: FR 398 606; DE 35 25 294 A1; EP 0 233 471 A1; EP 0 324 577 A1; GB 2 221 841; WO 90/08708; CA 739.282; EP 1369516 A1; DE 19833554 A1; GB 2348633 A; and EP 1321028 A1.

With the foregoing in mind, the wrapping materials of the present invention provide a solution to the problems noted above in the prior art.

It is known from DE 3301420 A1 to provide a wrapping material according to the preamble of claim 1.

A wrapping material according to the present invention is characterised by the features recited in the characterising portion of claim 1.

Upon wrapping an item, each fastener cooperates with fiber elements of an underlying or overlying segment of the wrapping material to engage, lock, hold, or otherwise fasten the wrapping material tightly around the circumference of the item being wrapped with the tail end of the wrapping material being secured to the corresponding overlying or underlying segment of the wrapping material.

Each fastener preferably includes, for example, a plurality of small "J", mushroom, or finger shaped engaging elements, although other shapes may be used. Each of these engaging elements include an engaging element body having an engaging element base at one end and terminating at an engaging element free end for engaging, catching, grabbing, locking, holding, or otherwise fastening to the fiber elements of a corresponding underlying or overlying segment of the wrapping material. The engaging element body, from its base to its free end, extends, at angle relative to a fastener base, a length that is sufficient to allow the free end to engage, catch, grab, lock, hold, or otherwise fasten into fibers of the underlying or overlying segment of the wrapping material at the conclusion of a wrapping cycle.

Each fastener may be positioned anywhere along the length of the wrapping portion that allows each fastener to carry out its intended function. In some embodiments, for example, the fastener may be positioned near the tail end area of each wrapping portion of the wrapping material. In other embodiments the fastener may be positioned near the central region of each wrapping portion of the wrapping material. Still, other embodiments may include the fastener positioned near the leading end or other areas of each wrapping portion of the wrapping material.

Each fastener may also be positionally oriented on the wrapping material within an angular range of substantially parallel to the length direction of each wrapping portion to substantially transverse to the length direction of each wrapping portion. With these arrangements, a wide variety of continuous and/or discontinuous areas of connection between each fastener and their respective underlying or overlying segment of wrapping material may be realized that would allow fine tuning of the connection force and connection area to specific uses, items to be wrapped, and environmental conditions, just to name a few.

The continuous wrapping component may be in the form of either a continuous, single wrapping component or a continuous, composite wrapping component. The wrapping material of the present invention may also be fabricated from at least one of the aforementioned continuous wrapping components in combination with at least one discontinuous wrapping component, which is different from the continuous component. The wrapping material is preferably provided in roll form and comprises a plurality of end-to-end connected wrapping portions each having at least one fastener associated therewith. Each fastener may be formed, for example, as either a single fastener component or a plurality of co-acting, discontinuous fastener components. The at least one continuous wrapping component is preferably made from a woven or non-woven material and has a width substantially equal to the width of the item to be wrapped and a length sufficient for covering at least the circumference of the item to be wrapped. The at least one discontinuous wrapping component is preferably made from a breathable polymeric material and has a width substantially equal to the width of the item being wrapped and a length for covering at least a part of the circumference of the item being wrapped. In embodiments where the wrapping material is fabricated from one of the aforementioned continuous wrapping components and without the discontinuous wrapping component, the continuous wrapping component may, preferably, be made from the same, or similar, breathable polymeric material as the at least one discontinuous wrapping component used in other embodiments.

The forgoing specific objects and advantages of the invention are illustrative of those that can be achieved by the present invention and are not intended to be exhaustive or limiting of the possible advantages that can be realized. Thus, these and other objects and advantages of this invention will be apartment from the description herein or can be learned from practicing the invention, both as embodied herein or as modified in view of any varation that may be apparent to those skilled in the art.

### BRIEF DESCRIPTION OF THE DRAWINGS

Figures 1A and 1B are cross-sectional views of hook-type fasteners according to the present invention;
Figures 1C and 1D are perspective views of the hook-type fastener according to the present invention;
Figures 2A-12 are various top views of the wrapping material in accordance to the present invention;
Figures 13A-C are cross-sectional views of the wrapping material loosely wrapped around the circumference of an item according to various embodiments of the present invention.
Figure 13D is a perspective view of the wrapping material during a wrapping cycle according to an embodiment of the present invention.

### DETAILED DESCRIPTION OF THE INVENTION

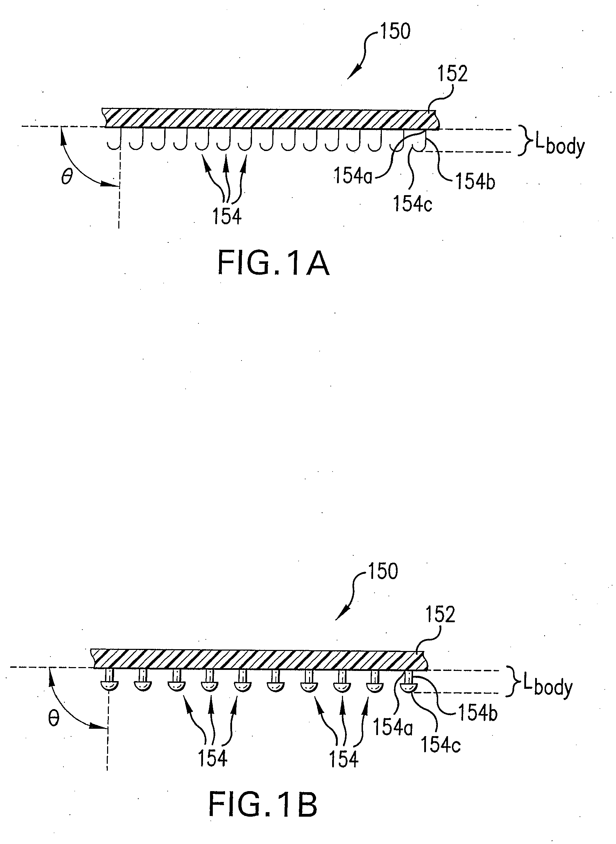

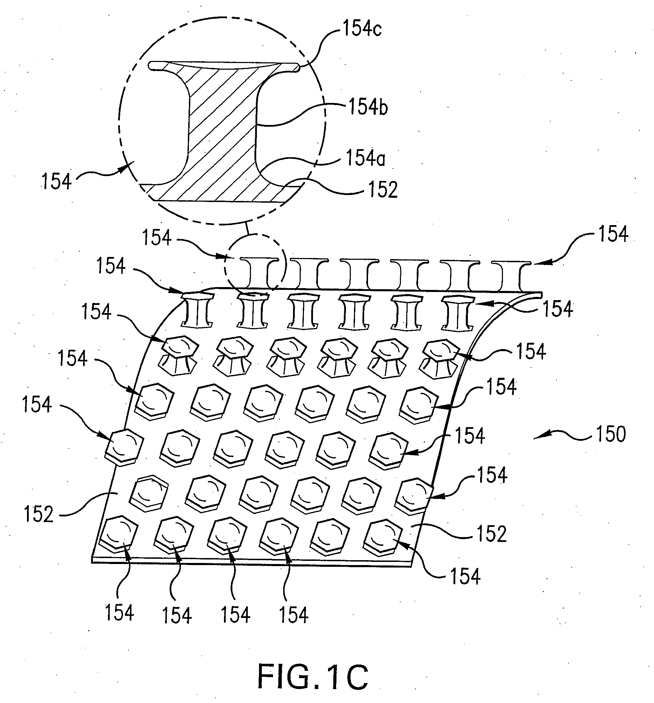

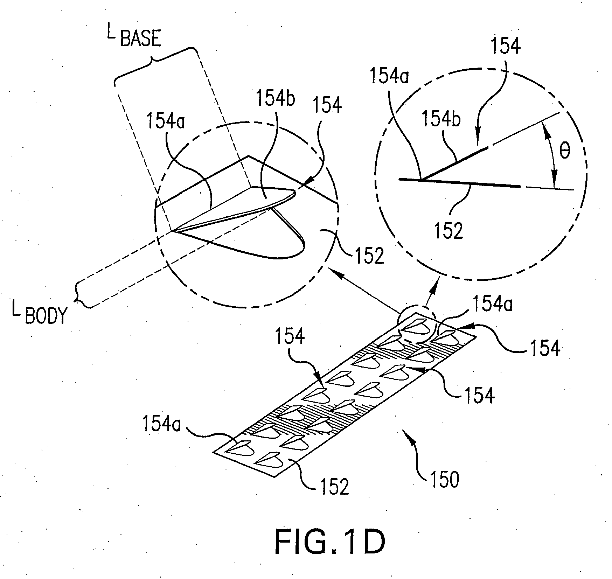

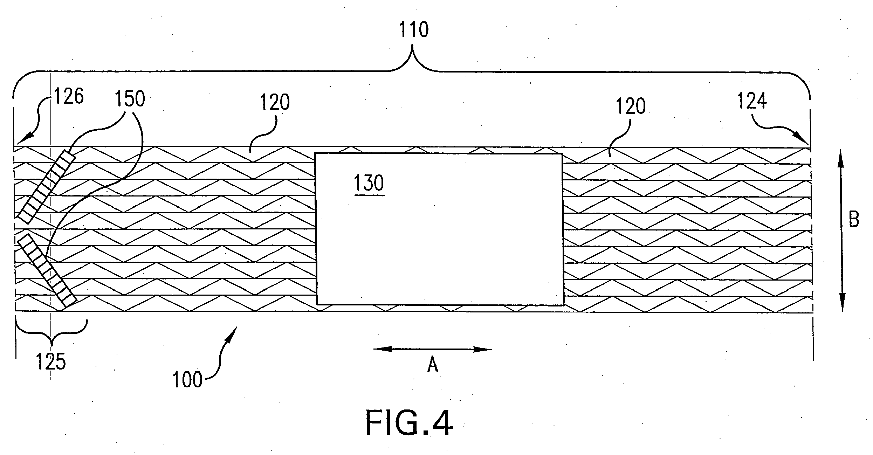

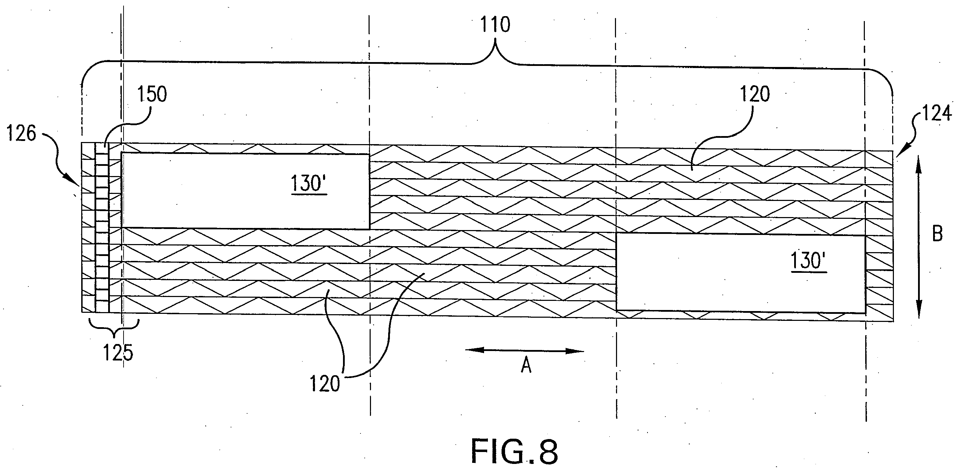

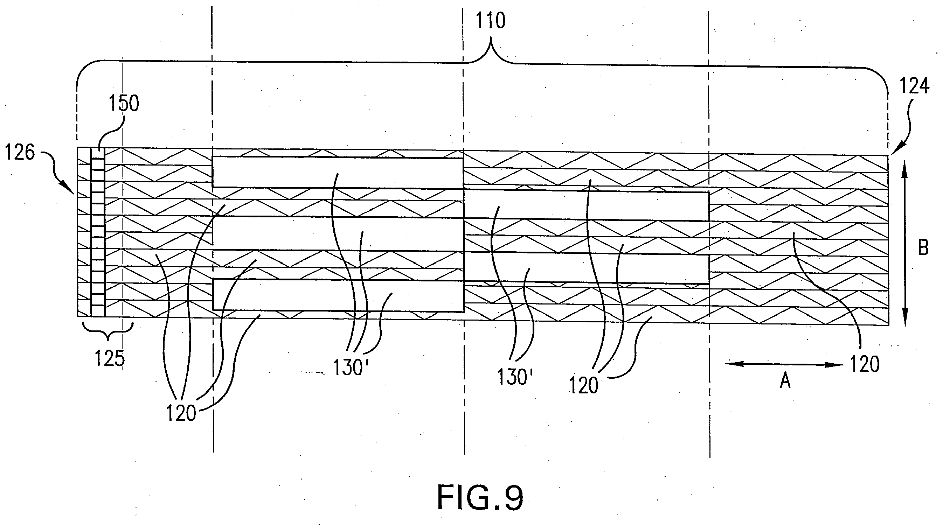

The invention will now be described with reference to Figures 1-13, and the corresponding non-limiting examples. Like reference characters and designations throughout the figures refer to like elements.

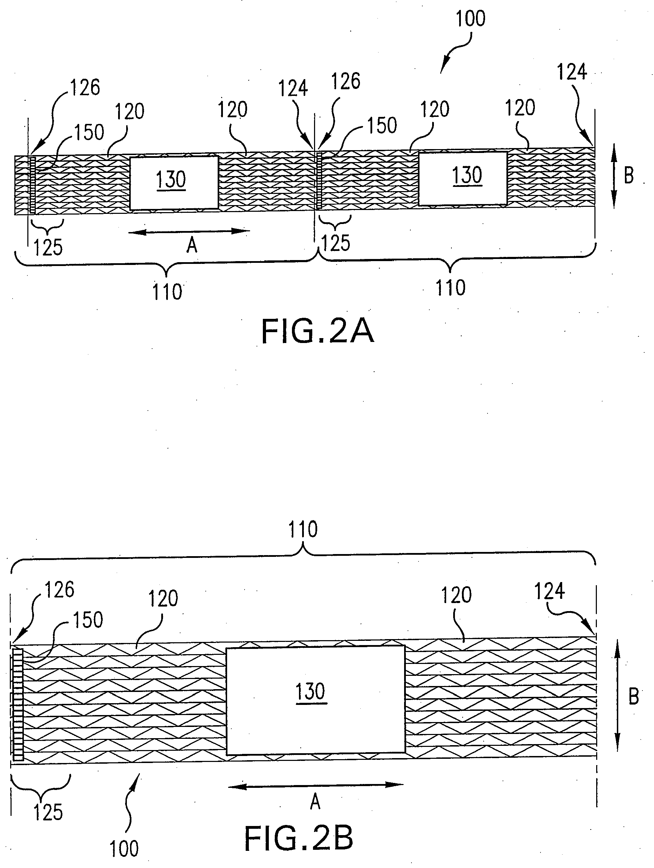

As generally shown throughout Figures 2A-13D, the present invention includes a wrapping material 100 having at least one wrapping portion 110 incorporating at least one fastener 150 for securing both the wrapping portion 110 and the tail end 126 thereof in place around a wrapped item I. The wrapping material 100 may form a continuous roll of wrapping material 100 made from a plurality of wrapping portions 110, at least two being shown in Figures 2A, 2C, 3A, 3C, 10, and 12. Alternatively, the roll of wrapping material 100 may also be formed from a plurality of wrapping portions 110 connected end-to-end to one another, i.e., either end-to-end as a single continuous web or end-to-end as a plurality of sequential discontinuous segments secured to one another at respective ends.

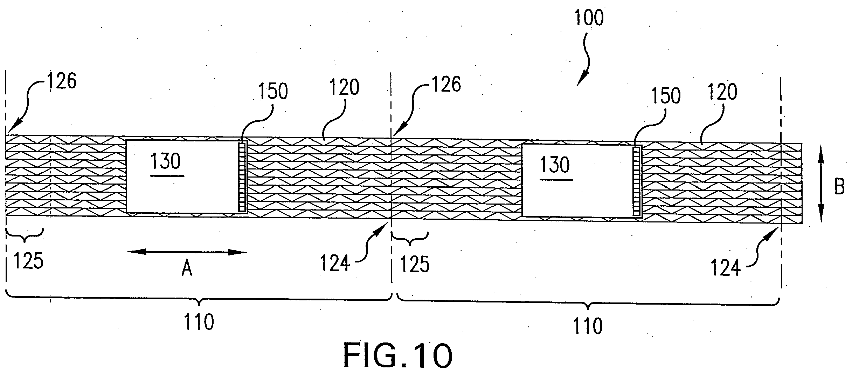

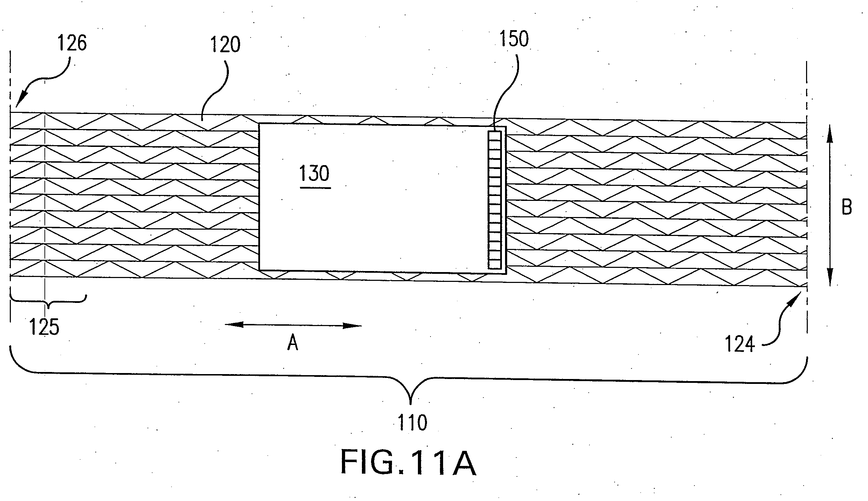

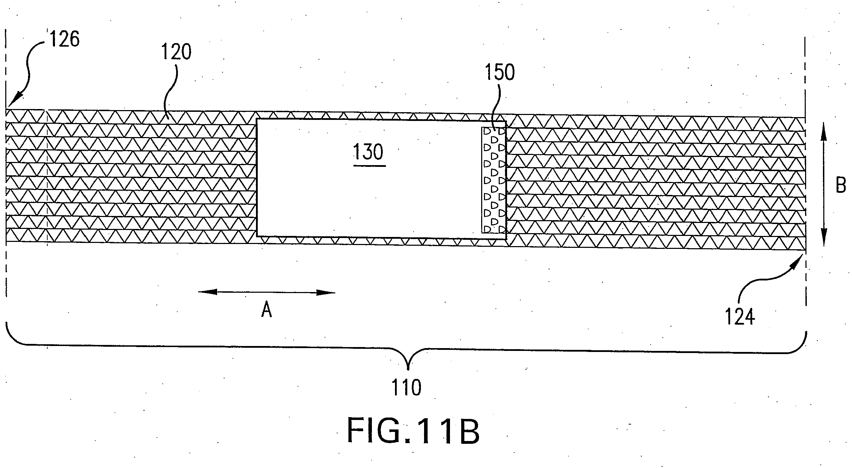

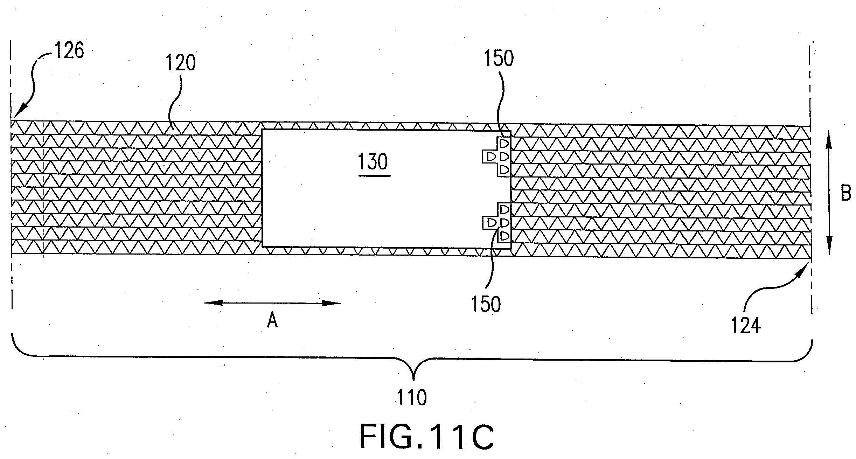

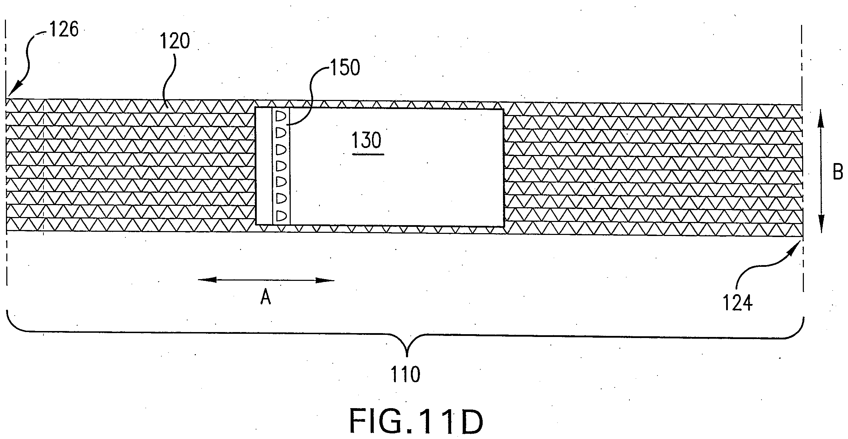

Disposed on each of the wrapping portions 110 is at least one fastener 150 in the form of a strip, or a collection of strip segments, such that the continuous roll of wrapping material 100 has a plurality of fasteners 150 serially disposed in an area of each of the plurality of wrapping portions and spaced from one another. Each wrapping portion 110 includes a fastener 150 within that area. As shown in Figures 2A-9 and 13A, for example, each fastener 150 may be disposed in the vicinity 125 of the tail end 126 of each wrapping portion 100. Alternatively, as shown in Figures 10 and 11A-D, each fastener 150 may also be disposed in an interior region of each wrapping portion 110 that is remote from both the leading end 124 and the tail end 126. With either arrangement, each fastener 150, upon wrapping an item I, will engage, catch, grab, lock, hold, or otherwise fasten into the fiber elements of the underlying or overlying portion 112 of the wrapping portion 110, thereby securing the wrapping portion around the item I as well as the tail end 126 to the underlying or overlying portion 112.

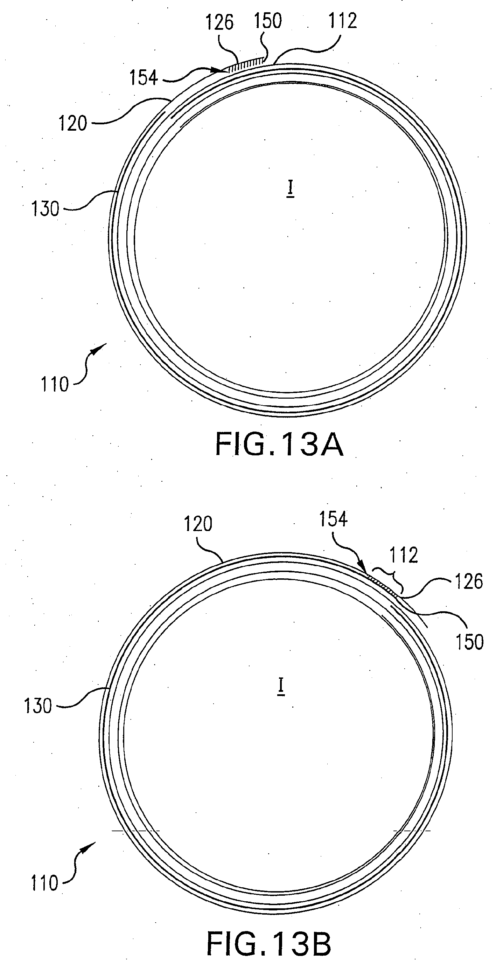

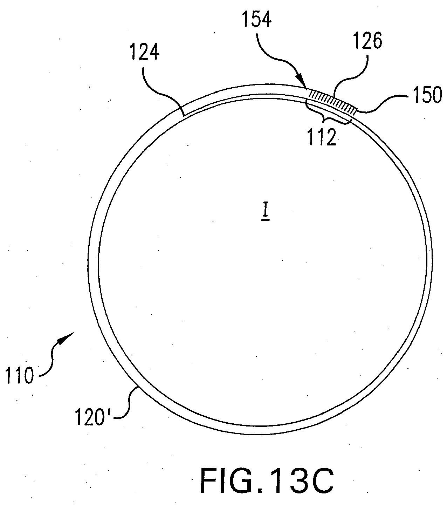

As shown in Figures 1A-1D, each fastener 150 include a fastener base 152 and a plurality of small "J" shaped, or mushroom shaped, or finger shaped engaging elements 154. Each of the plurality of engaging elements 154 are secured to the fastener base 152 at a respective engaging element base 154a. Each engaging element 154 extends away from the fastener base 152, at a general angle θ in a range of about 15 degrees to about 90 degrees, relative to the fastener base 152, along at least a portion of an engaging element body 154b at a length L_{body}. The length L_{body} of the engaging element 154b, for the embodiments shown in Figures 1A-1C, is within a general range of about 0.1 mm to about 10 mm, preferably, in a range of about 0.1 mm to about 1 mm, and more preferably, in a range of about 0.1 mm to about 0.5 mm, and terminating in the free end 154c. The length L_{body} of the engaging element body 154b, for the embodiment shown in Figure 1D, is within a general range of about 3 mm to about 20 mm, and more preferably, in a range of about 8 mm to about 12 mm. For the Figure 1D embodiment, the length L_{base} of the engaging element base 154a is also in a range of about 3 mm to about 20 mm, and more preferably, in a range of about 8 mm to about 12 mm. With the embodiment shown in Figures 1A-1C, the engaging elements 154 extend from the fastener base 152 generally at an angle of about 90 degrees relative to the fastener base, although the angle θ can vary. With the embodiment shown in Figure 1D, each of the engaging elements 154, preferably, extends away from the fastener base 152 at an angle θ in a range of about 15 degrees to about 45 degrees. The length of the engaging element base 154a for the embodiments of Figures 1A-1C, however, is substantially the thickness, or diameter, of the engaging element body near the fastener base 152. Figure 1A shows the engaging elements 154 as a "J" shape. Figures 1B and 1C shows the engaging elements 154 as having a mushroom shape. It should be understood that the engaging elements 154 may be of any shape that allows them to sufficiently carry out their intended function of grasping the fiber elements of an underlying or overlying portion 112 of the wrapping material 100 to secure both the wrapping portion 110 around a wrapped item I and the tail end 126 to the underlying or overlying portion 112. Each fastener 150 may be disposed either near the tail end 126 or within an interior region of each wrapping portion 110 of the wrapping material 100 and positioned in any angular orientation relative to either the length direction, shown as arrow A in Figures 2A-12, of the wrapping material 100 or the width direction, shown as arrow B in Figures 2A-12, of the wrapping material 100. Upon completion of a wrapping cycle, a wrapping portion 110, which is wrapped around the item I in a self-overlapping manner, as shown in Figures 13A-D, is secured to itself via the engaging, grabbing, locking, or fastening, interaction of the small engaging elements 154 with the fiber elements of a respective underlying or overlying segment 112 of the wrapping portion 110. The engaging action of the plurality of engaging elements 154 fasten, lock, grab, or otherwise secure the tail end 126 of each wrapping portion 110 securely in place as well as securing the wrapping portion 110, itself, tightly around the circumference of the wrapped item I.

In the embodiments shown in Figures 2A-11D and 13A-13C, the wrapping material 100 is formed as composite wrapping material 100 that includes a continuous netting component 120, a discontinuous, breathable material component 130, and at least one fastener 150. The netting 120 of the wrapping material 100 is preferably woven and may, preferably, take the form of a single continuous web of netting. Ideally, a suitable netting material may be any woven, preferably unraveling resistant, material with sufficient longitudinal (length direction A) and lateral (width direction B) strength to hold the wrapping material 100 in place around an item to be wrapped, and that allows attachment, via an adhesive or other suitable connection means, of the breathable material panels 130 and the fasteners 150 with minimal difficulty.

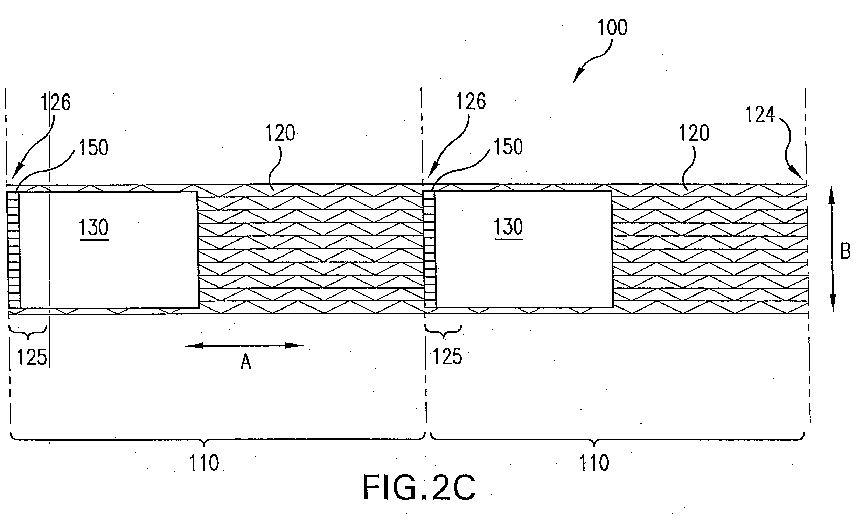

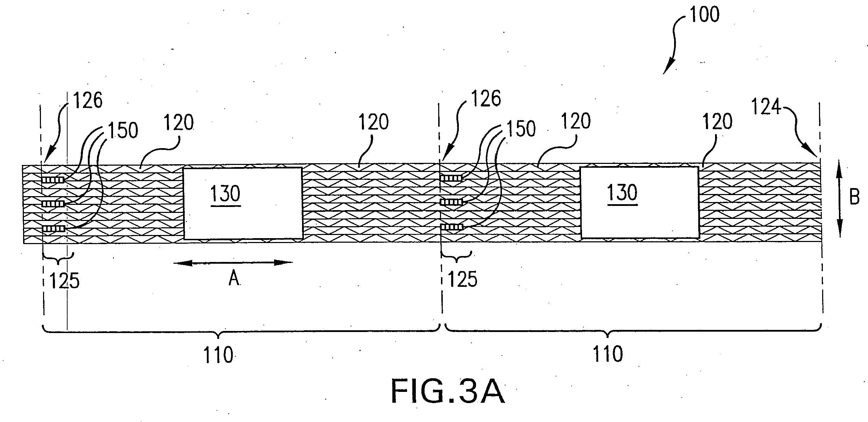

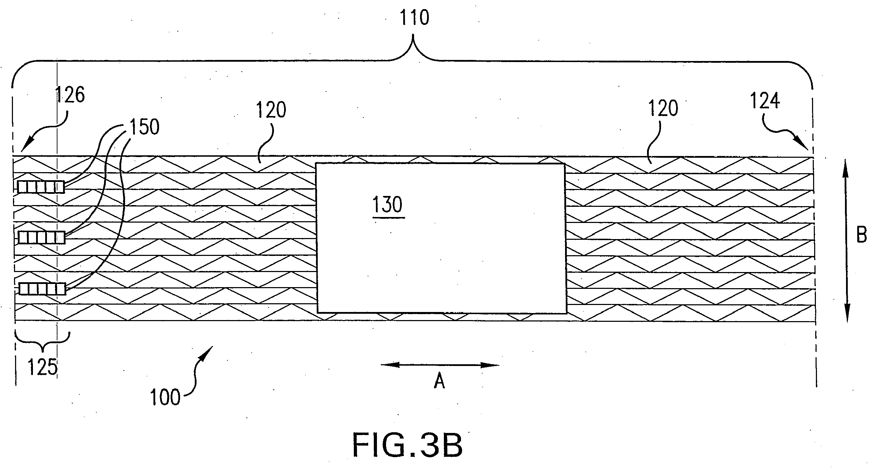

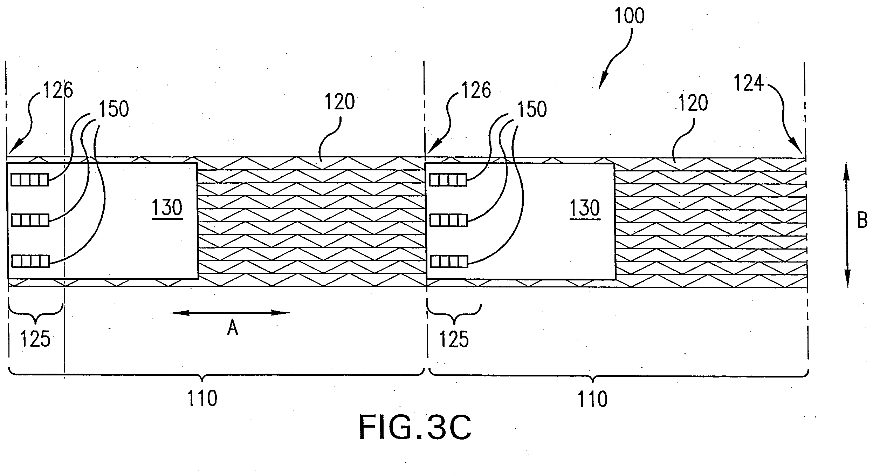

The breathable material 130 may include a non-woven material or film, such as, for example, fused polyethylene material (e.g., Tyvek ®), SMS (styrene/alphamethylstyrene), spun bound materials, melt blown material, micro perforated film, multilayer breathable sheets, or the like. Each of the breathable material component 130 allow water vapor to escape from the wrapped item, and prevents condensation or moisture from getting to the wrapped item I from the outside. The breathable material components 130 may be formed into a plurality of discontinuous panels, though at least two such panels 130 are illustrated in Figures 2A, 2C, 3A, 3C, and 10, it should be understood that any number of such panels 130 are adhered to the continuous web of netting 120 in a substantially repeating pattern throughout its length. The breathable material panels 130 are spaced along the continuous netting material 120 at pre-selected intervals, which relate to a circumference of an item I to be wrapped. The overall width of the breathable materials 130 is substantially equal to a width of the item I to be wrapped. The breathable panels 130 may be secured to the netting component 120, via any suitable adhesive, at any desired location. Figures 2A-4 show the breathable panels 130 positioned approximately in the central area of each wrapping portion 110, although the breathable panels 130 may be positioned any where along the length of the wrapping portion 110. Figures 2C and 3C show the breathable panels 130 in an alternative arrangement, in which the breathable panels 130 are positioned near the tail end 126 of each wrapping portion 110 of the wrapping material 100.

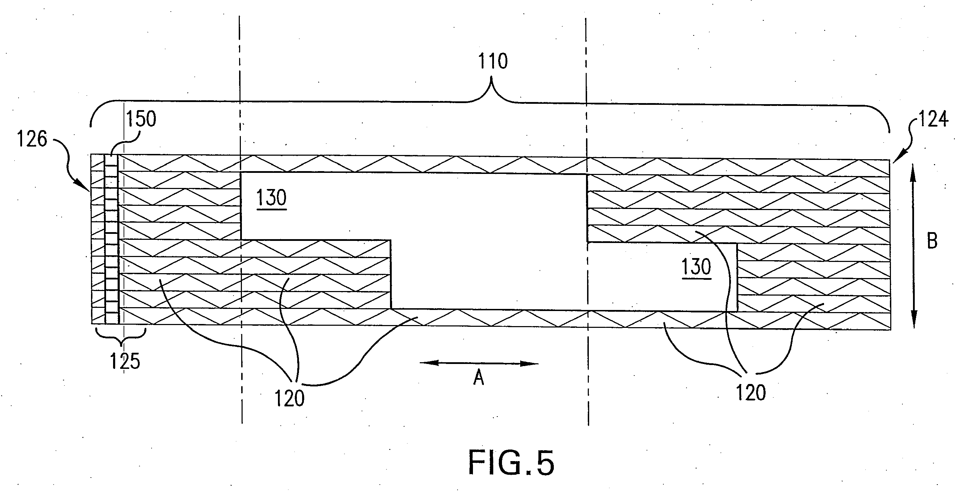

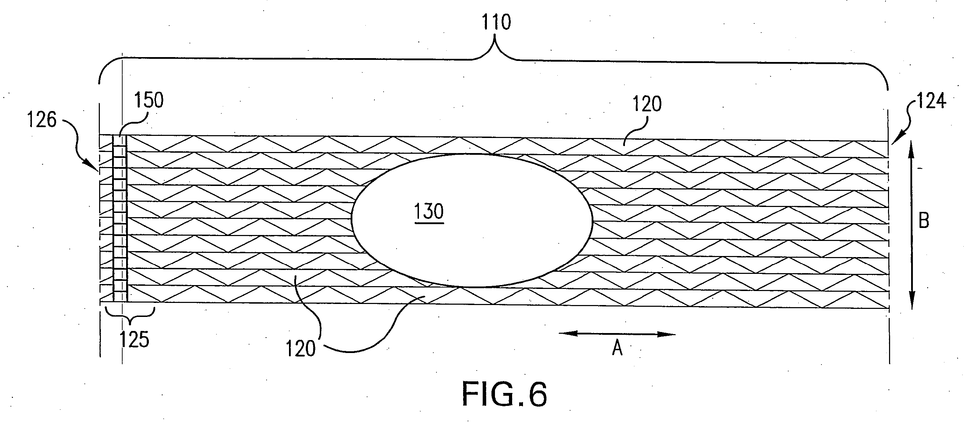

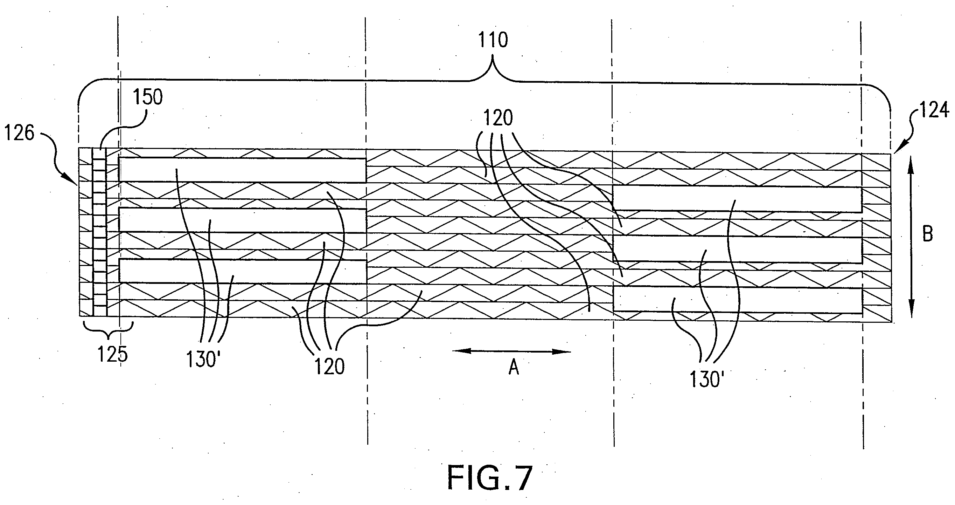

As shown in Figures 2A-6, 10, and 11A-D, each breathable panel 130 may comprise a single sheet of breathable material having various geometrical shapes. The shape of the breathable panel 130, as shown in Figures 2A-4, 10, and 11A-D may be generally rectangular, whereas the breathable panel 130 may also be made in various other shapes, such as, for example, the shapes shown in Figures 5 and 6. Further, the breathable panel 130 may also be made from a collection, or plurality, of smaller breathable sub-panels 130', such as, for example, the sub-panels 130' shown in Figures 7-9. When wrapped around an item I, the sub-panels 130' of the wrapping portion 110, collectively co-act with one another to form a breathable panel 130 having a width and length as previously discussed. It should be noted that any of the single panels 130 can be substituted with a plurality of sub-panels 130' that, which wrapped around an item I co-act together to form a single panel. In arrangements utilizing sub-panels 130', each fastener 150 used therewith may take the form of the previously described single continuous fastener strip or plurality of discontinuous fastener strip segments, which may also be disposed on either, or both, of the continuous component 120 and/or the discontinuous components 130 and/or 130' of the composite wrapping material 100.

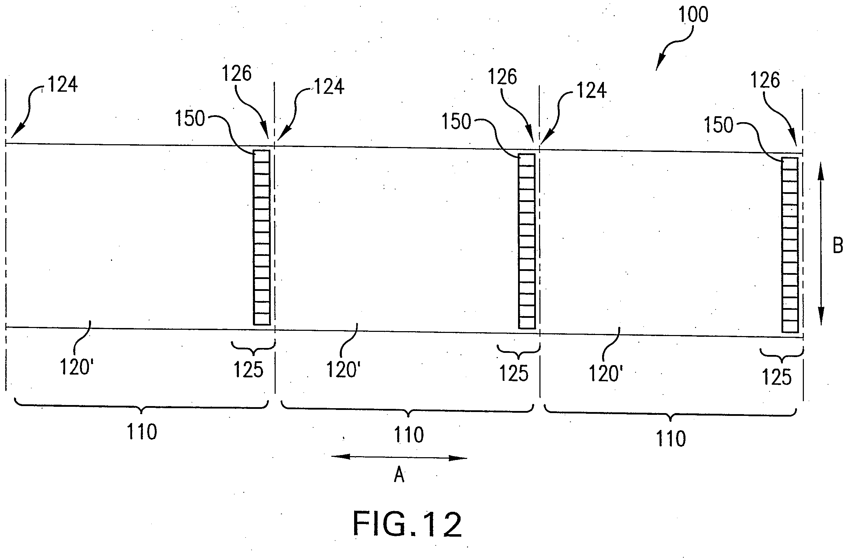

As shown in Figure 12, the wrapping material 100 is fabricated from a continuous, single or composite wrapping component 120', which does not include the use of the discontinuous wrapping components 130 , 130', as utilized in the embodiments of Figures 2A-11D. In this embodiment, the continuous wrapping component 120' is formed from either a continuous, single sheet or a plurality of discontinuous sheets secured together end-to-end to form a continuous composite wrapping components 120'. Regardless of whether the continuous wrapping components 120' is utilized as a continuous, single wrapping component or a continuous, composite wrapping components, each wrapping portion 110, nonetheless, includes a fastener 150 in the same manner as previously discussed with respect to the other embodiments or further discussed hereinafter.

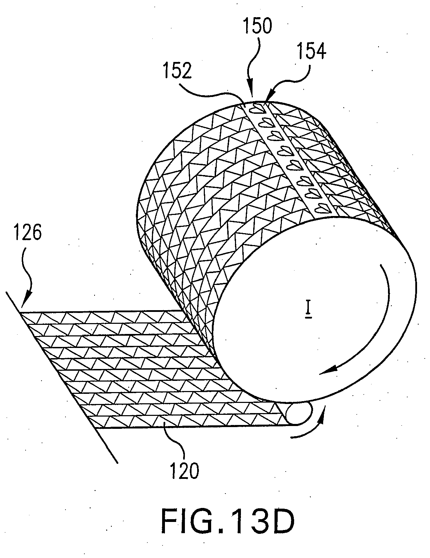

The fasteners 150, as shown throughout the figures, may be positioned (1) in the vicinity 125 of the trailing end 126, (2) remote from the leading edge 124 and the trailing edge 126 of each wrapping portion 110; or (3) in the vicinity of the leading edge 124. The fastener base 152 of each fastener 150 is secured by any suitable means, such as, for example, an adhesive, to the single continuous component 120' of the wrapping material 100, as shown in Figures 12 and 13D, or to either one or both of the continuous component 120 and the discontinuous component 130, or sub-components 130', as shown in Figures 2A-11 and 13A-D. Each fastener 150 may also be positionally oriented on the wrapping material 100 within an angular range from substantially parallel to either of the length direction (arrow A) or width direction (arrow B) of the wrapping material 100 to substantially transverse to the length direction (arrow A) or width direction (arrow B) of the wrapping material 100. With these arrangements, a wide variety of continuous and discontinuous areas of connection between each fastener 150 and the respective underlying or overlying segments 112 of the wrapping material 100 may be realized that would allow for fine tuning of the connection force and connection area to specific uses, items to be wrapped, and environmental conditions, to name a few. As the item I is being wrapped the plurality of engaging elements 154 will mesh, engage, or interact with the fiber elements of any underlying or overlying segment 112 of the wrapping material 100, thereby locking the tail end 126 in place and securing the wrapping portion 110 around the circumference of the wrapped item I. It should also be noted that when sub-panels 130' are utilized, a collection of fasteners 150 may also be disposed and positioned thereon in the same manner discussed above.

Figures 13A-C illustrate cross-sectional ans perspective views of a wrapped item I in accordance with various embodiments of the invention, which, for the sake of understanding, show wrapping portions 110 loosely wrapped around an item I. Figure 13D, on the other hand, illustrates a perspective view of a wrapped item I near the end of a wrapping cycle. As shown in Figures 13A and 13B, when the breathable material, or discontinuous components, 130 is, or are, mounted on a face of the netting material, or continuous component, 120 is placed against the item I, what is essentially a first layer of netting will contact the item I at a first level. This contacting netting corresponds to a first wrapping layer and may comprise slightly more or less than one complete circumference of a wrapping, as desired, around the item I. Above this layer is the discontinuous breathable material component 130, 130' forming a second wrapping layer, and above the second layer a third layer of netting material 120 is formed from a continuation of the same continuous netting material component 120 that formed the first wrapping layer. Each fastener 150, which has, for example, been attached to either the continuous component 120 or discontinuous component 130, 130', will be pressed into contact, or otherwise interact, with an underlying or overlying segment 112, as shown in Figures 13A and 13B, of the continuous netting material components 120. It is this contact that allows the plurality of engaging elements 154 of each fastener 150 to engage, catch, grab, lock, hold, or otherwise fasten the fiber elements of the underlying or overlying segment 112 of the wrapping material 100. The interaction between the plurality of small engaging elements with the fiber elements of the respective underlying or overlying segments 112 allows the fasteners 150 to engage, catch, grab, lock, hold, or otherwise fasten the wrapping material 100, as a whole, tightly around the wrapped item I with the tail end 126 secured as previously discussed.

With specific regard to the embodiment shown in Figure 13D, the wrapping material 100 specifically utilizes the fastener 150 shown in Figure 1D, the finger-like engaging elements 154 are sufficiently resilient so as to raise above the engaging element base 152 to engage, catch, grab, lock, hold, or otherwise fasten to the fibers of the wrapping material component 110 in place around the item I. As discussed above, each of finger-like engaging element bodies 154b, as shown in Figure 1D, are angled away from the fastener base 152 an angle θ in a preferred range of about 15 degrees to about 45 degrees.

As shown in Figure 12, the wrapping portion 110 is comprised of the single breathable material 120' that may comprise slightly more than one complete circumference of a wrapping, as desired, around the item I to allow for fastener interaction with an underlying or overlaying segment 112. Each fastener 150, which has, for example, been attached thereto, preferably in either (1) in the vicinity 125 of the trailing end 126, as shown in Figures 12 and 13D, or (2) remote from the leading edge 124 and the trailing edge 126, not shown, of each wrapping portion 120', will be pressed into contact with an underlying or overlying segment 112 of the single continuous breathable component 120'. Just as in the composite wrapping material 100 of other embodiments, such contact allows the plurality of engaging elements 154 of each fastener 150 to engage the fiber elements of the underlying or overlying segment 112 of the wrapping material 100. The interaction between the plurality of engaging elements with the fiber elements of the respective underlying or overlying segments 112, allows the fasteners 150 to engage, lock, hold, or otherwise fasten the wrapping material 100, as a whole, tightly around the wrapped item I with the tail end 126 secured as previously discussed.

It should be emphasized that the wrapping material of the present invention is not limited only to the specific material or specific dimensions, and has applications for preparation of all wrapping material, taking into consideration the desirable qualities of each material and the purposes for which the items are being wrapped.

Although illustrative embodiments have been described herein in detail, it should be noted and understood that the descriptions and drawings have been provided for purposes of illustration only and that other variations both in form and detail can be added thereupon without departing from scope of the invention as defined by the claims. The terms and expressions have been used as terms of description and not terms of limitation.

## Claims

1. A wrapping material for wrapping an item having a circumference, comprising a plurality of wrapping portions (110), each having a wrapping portion length greater than the circumference of the item and a wrapping portion width, transverse to said wrapping portion length, said plurality of wrapping portions (110) forming a continuous roll of wrapping material (100); and
at least one fastener (150) secured to an area of each of said plurality of wrapping portions (110) such that said continuous roll of wrapping material (100) includes a plurality of fasteners (150) serially disposed thereon and spaced from one another so that each of said plurality of wrapping portions (110) includes said at least one fastener (150) within said area, each of said plurality of fasteners (150) include a plurality of engaging elements (154) for engaging a plurality of fibre elements of an underlying or overlying segment of a respective wrapping portion during a wrapping cycle so as to secure a tail end of said respective wrapping portion to said underlying or overlying segment (112) at the end of a wrapping cycle, **characterised in that** each of said plurality of wrapping portions (110) include a continuous wrapping component (120) and a discontinuous wrapping component (130) attached to said continuous wrapping component (120), the continuous wrapping component (120) being a netting material and the discontinuous wrapping component (130) is at least one breathable polymeric panel, said at least one fastener (150) being attached to either of said continuous or discontinuous wrapping components (120,130).

2. The wrapping material according to claim 1, wherein each of said plurality of engaging elements (154) include an engaging element body (154b) having an engaging element base (152) and an engaging element free end, said engaging element base (152) being attached to a fastener base (152) and said engaging element free end being adapted to engage said fibre elements of said underlying or overlying segment (112).

3. The wrapping material according to claim 2, wherein each engaging element body (154b) has a length in a range of about 0.1mm to about 20mm.

4. The wrapping material according to claim 2, wherein each engaging element body (154b) extends from said fastener base (152) at an angle in a range of about 15 degrees to about 90 degrees relative to the fastener base (152).

5. The wrapping material according to claim 1, wherein each of said at least one breathable panel (130) comprises a plurality of sub-panels (130') disposed on said continuous wrapping component (120) in such a manner so as to co-act with one another to form said at least one breathable panel (130) when said continuous wrapping component (120) is wrapped around the circumference of an item.

6. The wrapping material according to claim 1, wherein each of said plurality of wrapping portions (110) includes a continuous wrapping component (120) connected end-to-end with other adjacent wrapping portions (110) forming said continuous roll of wrapping material (100).

7. The wrapping material according to claim 6, wherein said continuous wrapping component (120) comprises a breathable polymeric material.

8. The wrapping material according to claim 1, wherein said discontinuous wrapping component has a width substantially equal to the width of the item being wrapped and a length sufficient for covering at least a part of the circumference of the item to be wrapped.

## Patentansprüche

1. Einwickelmaterial zum Einwickeln eines Gegenstandes, der einen Umfang aufweist, wobei das Einwickelmaterial Folgendes umfasst: eine Vielzahl von Einwickelabschnitten (110), von denen jeder eine Länge des Einwickelabschnitts, die größer ist als der Umfang des Gegenstandes, und eine Breite des Einwickelabschnitts quer zur Länge des Einwickelabschnitts aufweist, wobei die Vielzahl von Einwickelabschnitten (110) eine kontinuierliche Rolle aus Einwickelmaterial (100) bildet; und
mindestens ein Befestigungselement (150), das an einem Bereich von jedem der mehreren Einwickelabschnitte (110) befestigt ist, so dass die kontinuierliche Rolle des Einwickelmaterials (100) eine Vielzahl von Befestigungselementen (150) aufweist, die seriell darauf angeordnet und voneinander beabstandet sind, so dass jeder der mehreren Einwickelabschnitte (110) das mindestens eine Befestigungselement (150) innerhalb des Bereichs umfasst, wobei jedes der Vielzahl von Befestigungselementen (150) mehrere Eingriffselemente (154) zum Eingreifen in eine Vielzahl von Faserelementen eines darunter liegenden oder darüber liegenden Segments eines jeweiligen Einwickelabschnitts während eines Einwickelzyklus umfasst, um ein hinteres Ende des jeweiligen Einwickelabschnitts am Ende eines Einwickelzyklus an dem darunter liegenden oder darüber liegenden Segment (112) zu befestigen, **dadurch gekennzeichnet, dass** jeder der mehreren Einwickelabschnitte (110) eine kontinuierliche Einwickelkomponente (120) und eine diskontinuierliche Einwickelkomponente (130) umfasst, die an der kontinuierlichen Einwickelkomponente (120) befestigt ist,
wobei die kontinuierliche Einwickelkomponente (120) aus einem Netzmaterial besteht und die diskontinuierliche Einwickelkomponente (130) mindestens eine atmungsaktive Polymerbahn ist, wobei das mindestens eine Befestigungselement (150) an einem der kontinuierlichen oder diskontinuierlichen Einwickelkomponenten (120, 130) befestigt ist.

2. Einwickelmaterial nach Anspruch 1, wobei jedes der mehreren Eingriffselemente (154) einen Eingriffselementkörper (154b) umfasst, der eine Eingriffselementbasis (152) und ein freies Ende des Eingriffselements aufweist, wobei die Eingriffselementbasis (152) an einer Befestigungsbasis (152) befestigt ist und wobei das freie Ende des Eingriffselements dafür ausgelegt ist, dass es in die Faserelemente des darunter liegenden oder darüber liegenden Segments (112) eingreift.

3. Einwickelmaterial nach Anspruch 2, wobei jeder Eingriffselementkörper (154b) eine Länge in einem Bereich von etwa 0,1 mm bis etwa 20 mm aufweist.

4. Einwickelmaterial nach Anspruch 2, wobei sich jeder Eingriffselementkörper (154b) von der Befestigungsbasis (152) in einem Winkel in einem Bereich von etwa 15 Grad bis etwa 90 Grad im Verhältnis zu der Befestigungsbasis (152) erstreckt.

5. Einwickelmaterial nach Anspruch 1, wobei jede der mindestens einen atmungsaktiven Bahn (130) eine Vielzahl von Unterplatten (130') aufweist, die so auf der kontinuierlichen Einwickelkomponente (120) angeordnet sind, dass sie miteinander zusammenwirken, um die mindestens eine atmungsaktive Bahn (130) zu bilden, wenn die kontinuierliche Einwickelkomponente (120) um den Umfang eines Gegenstandes gewickelt wird.

6. Einwickelmaterial nach Anspruch 1, wobei jeder der mehreren Einwickelabschnitte (110) eine kontinuierliche Einwickelkomponente (120) umfasst, die mit anderen benachbarten Einwickelabschnitten (110), die die kontinuierliche Rolle des Einwickelmaterials (100) bilden, Ende an Ende verbunden ist.

7. Einwickelmaterial nach Anspruch 6, wobei die kontinuierliche Einwickelkomponente (120) ein atmungsaktives Polymermaterial umfasst.

8. Einwickelmaterial nach Anspruch 1, wobei die diskontinuierliche Einwickelkomponente eine Breite, die im Wesentlichen gleich der Breite des Gegenstandes ist, der eingewickelt wird, und eine Länge, die ausreicht, um mindestens einen Teil des Umfangs des einzuwickelnden Gegenstandes zu bedecken, aufweist.

## Revendications

1. Matériau d'emballage servant à emballer un article ayant une circonférence, comportant une pluralité de parties d'emballage (110), chacune ayant une longueur de partie d'emballage supérieure à la circonférence de l'article et une largeur de partie d'emballage, allant dans le sens transversal par rapport à ladite longueur de partie d'emballage, ladite pluralité de parties d'emballage (110) formant un rouleau continu de matériau d'emballage (100) ; et
au moins un élément de fixation (150) assujetti au niveau d'une zone de chacune de ladite pluralité de parties d'emballage (110) de telle sorte que ledit rouleau continu de matériau d'emballage (100) comprend une pluralité d'éléments de fixation (150) disposés en série sur celle-ci et espacés les uns par rapport aux autres de telle sorte que chacune de ladite pluralité de parties d'emballage (110) comprend ledit au moins un élément de fixation (150) à l'intérieur de ladite zone, chacun de ladite pluralité d'éléments de fixation (150) comprend une pluralité d'éléments de mise en prise (154) à des fins de mise en prise d'une pluralité d'éléments fibreux d'un segment sous-jacent ou sus-jacent d'une partie d'emballage respective au cours d'un cycle d'emballage de manière à assujettir une extrémité arrière de ladite partie d'emballage respective sur ledit segment sous-jacent ou sus-jacent (112) à la fin d'un cycle d'emballage, **caractérisé en ce que** chacune de ladite pluralité de parties d'emballage (110) comprend un composant d'emballage continu (120) et un composant d'emballage discontinu (130) attaché audit composant d'emballage continu (120), le composant d'emballage continu (120) étant un matériau de type filet et le composant d'emballage discontinu (130) est au moins un panneau polymère perméable à l'air, ledit au moins un élément de fixation (150) étant attaché sur l'un ou l'autre parmi lesdits composants d'emballage continu ou discontinu (120, 130).

2. Matériau d'emballage selon la revendication 1, dans lequel chacun de ladite pluralité d'éléments de mise en prise (154) comprend un corps d'élément de mise en prise (154b) ayant une base d'élément de mise en prise (152) et une extrémité libre d'élément de mise en prise, ladite base d'élément de mise en prise (152) étant attachée à une base d'élément de fixation (152) et ladite extrémité libre d'élément de mise en prise étant adaptée à des fins de mise en prise desdits éléments fibreux dudit segment sous-jacent ou sus-jacent (112).

3. Matériau d'emballage selon la revendication 2, dans lequel chaque corps d'élément de mise en prise (154b) a une longueur se trouvant dans une plage allant d'environ 0,1 mm à environ 20 mm.

4. Matériau d'emballage selon la revendication 2, dans lequel chaque corps d'élément de mise en prise (154b) s'étend depuis ladite base d'élément de fixation (152) selon un angle se trouvant dans une plage allant d'environ 15 degrés à environ 90 degrés par rapport à la base d'élément de fixation (152).

5. Matériau d'emballage selon la revendication 1, dans lequel chacun desdits au moins un panneau perméable à l'air (130) comporte une pluralité de sous-panneaux (130') disposés sur ledit composant d'emballage continu (120) de telle manière à co-agir avec un autre pour former ledit au moins un panneau perméable à l'air (130) quand ledit composant d'emballage continu (120) est enroulé autour de la circonférence d'un article.

6. Matériau d'emballage selon la revendication 1, dans lequel chacune de ladite pluralité de parties d'emballage (110) comprend un composant d'emballage continu (120) connecté bout à bout avec d'autres parties d'emballage adjacentes (110) formant ledit rouleau continu de matériau d'emballage (100).

7. Matériau d'emballage selon la revendication 6, dans lequel ledit composant d'emballage continu (120) comporte un matériau polymère perméable à l'air.

8. Matériau d'emballage selon la revendication 1, dans lequel ledit composant d'emballage discontinu a une largeur sensiblement égale à la largeur de l'article emballé et une longueur suffisante pour recouvrir au moins une partie de la circonférence de l'article devant être emballé.
